# EUROPÄISCHE PATENTSCHRIFT

(11) **EP 2 766 102 B1**
(45) Veröffentlichungstag und Bekanntmachung des Hinweises auf die Patenterteilung: **26.12.2018**
(21) Anmeldenummer: 12781253.5
(22) Anmeldetag: 11.10.2012
(51) Int. Cl.: B62B 3/00

(54) **ELEKTRO-TROLLEY**
ELECTRIC CART
CHARIOT ÉLECTRIQUE

(30) Priorität: 11.10.2011 AT 5562011 U
(43) Veröffentlichungstag der Anmeldung: 20.08.2014
(73) Patentinhaber: Aurotec GmbH, 4840 Vöcklabruck (AT)
(72) Erfinder: RAUCH, Ernst, 4840 Vöcklabruck (AT); ZIKELI, Stefan, 4844 Regau (AT)
(74) Vertreter: Sonn & Partner Patentanwälte
(86) Internationale Anmeldenummer: PCT/AT2012/050148
(87) Internationale Veröffentlichungsnummer: WO 2013/052977

(56) Entgegenhaltungen:
- US-A- 2 706 008
- US-A- 3 561 555
- US-A- 5 375 673
- US-A- 5 749 424

## Beschreibung

Die Erfindung betrifft eine Transportvorrichtung mit einem Fahrgestell, das mindestens drei Räder an mindestens zwei Achsen lagert, von denen eine Achse eine Antriebsachse ist, die nur ein einzelnes, mittiges, elektrisch angetriebenes Rad trägt, welches einen Nabenmotor aufweist, mit einer Stützeinheit, die zur Aufnahme einer länglichen Last, vorzugsweise einer Golftasche, eingerichtet ist, und mit einem Führungsteil, welches auf einer Bedienungsseite einen Griffbereich aufweist.

Prinzipiell verwandte, wenn auch etwas einfachere, weil nicht angetriebene Vorrichtungen sind im Stand der Technik in verschiedensten Varianten unter der Bezeichnung "Golf-Trolley" bekannt und erfreuen sich zum Transport der Golfausrüstung unter Golfspielern bzw. bei Ausübung des Golfsports großer Beliebtheit. Häufig handelt es sich dabei um eine über einer einzelnen Achse mit zwei freien Rädern gelagerten Stützeinheit.

Um die Handhabung insbesondere beim Zurücklegen größerer Distanzen zu vereinfachen, wurden bereits unterschiedliche Arten von elektrisch angetriebenen Golf-Trolleys entwickelt, wobei meistens zwei Haupträder entweder gemeinsam oder getrennt angetrieben werden und zusätzlich ein drittes Rad vorgesehen ist um ein insgesamt selbstfahrendes Fahrgestell zu bilden. Derartige angetriebene Golf-Trolleys sind in der US Des. 321,964,
US 3,635,301 A und US 3,704,758 A gezeigt. Allen derartigen Golf-Trolleys ist gemein, dass bei einem Ankippen des Trolley zum Manövrieren entweder alle Antriebsräder vom Boden abgehoben sind und der Trolley somit manuell geschoben bzw. gezogen werden muss oder dass mindestens zwei beabstandete Antriebsräder am Boden bleiben und ein Manövrieren aufgrund der durch den Antrieb blockierten Relativbewegung der beiden Räder unmöglich oder zumindest erheblich erschwert ist.

Die CN 2 524 795 Y zeigt einen Golf-Trolley der eingangs angeführten Art, wobei eine Stützeinheit mit zwei großen leerlaufenden Rädern verbunden ist und über deren Achse hinaus ragt. Am anderen, unteren Ende ist die Stützeinheit über eine Welle mit einer verdrehbaren Gabel verbunden. Zur der Stützeinheit gegenüberliegenden Seite geht von der Gabel ein hebelartiges Führungsteil aus, an dessen Ende ein Griff montiert ist, über den der Einschlag der Gabel und somit die Bewegungsrichtung des Golf-Trolley gesteuert werden kann. Sofern ein Kippen dieser Vorrichtung mittels des Führungsteils über die Antriebsachse überhaupt möglich ist, ist dies jedenfalls durch die Lage der Stützeinheit auf der dem Führungsteil gegenüberliegenden Seite sehr schwierig, da der Schwerpunkt der Last bzw. der Vorrichtung näher zur Achse mit den nicht angetriebenen Rädern liegt und somit wegen des dadurch gegebenen langen Hebelarms zur Last ein hohes Kippmoment aufgebracht werden muss.

Die US 5 749 424 A zeigt einen angetriebenen Golf-Trolley mit einer Rahmenkonstruktion, welche zwei Achsen aufweist, von denen auf einer ein einzelnes, mittiges Antriebsrad und auf der anderen zwei Laufräder gelagert sind.

Die US 5 375 673 A betrifft eine Antriebseinheit, welche mit einem konventionellen, nicht-angetriebenen Golf-Trolley verbunden werden kann. Der in US 2 706 008 A gezeigte Golf-Trolley weist ein aus mehreren Gestellteilen zusammengesetztes Fahrgestell auf. In beiden Dokumenten ist eine Führungsstange gelenkig mit dem übrigen Gestell verbunden.

Die US 3 561 555 A betrifft eine Antriebseinheit, deren Stützrohr mittels einer Klemmvorrichtung mit einem Stützschaft eines nicht-angetriebenen Golf-Carts verbunden werden kann.

Demgemäß ist es eine Aufgabe der Erfindung, eine Transportvorrichtung der eingangs angeführten Art zu schaffen, die auch im beladenen Zustand ohne großen Kraftaufwand einfach zu kippen ist, wobei im gekippten Zustand weder auf den Antrieb noch auf eine optimale Manövrierbarkeit verzichtet werden muss. Außerdem soll die Breite den Fahrgestells auf der Bedienungsseite möglichst gering sein, um ein versehentliches Anstossen der Beine beim Bedienen der Transportvorrichtung zu vermeiden.

Diese Aufgabe wird bei der gattungsgemäßen Transportvorrichtung erfindungsgemäß dadurch gelöst, dass die Antriebsachse unverschwenkbar im Fahrgestell gelagert ist oder über eine mit einem Motor gegenüber dem Fahrgestell verdrehbare Gabel mit dem Fahrgestell verbunden ist, und dass das Verhältnis zwischen einem Durchmesser des angetriebenen Rads und einer Breite der Lauffläche zwischen 0,6 und 3,25 liegt, wobei die Transportvorrichtung durch Abwärtsdrücken des Führungsteils über die Antriebsachse kippbar ist, wobei in der gekippten Betriebsstellung die Antriebsachse am Fahrgestell auf der Bedienungsseite vorliegt, die Stützeinheit quer über die Antriebsachse im Wesentlichen in Richtung der Bedienungsseite ragt und lediglich das einzelne angetriebene Rad Bodenkontakt hat. Die Stützeinheit dient dabei der Lagerung der länglichen Last, d.h. die Last liegt beispielsweise an zumindest zwei Auflagestellen auf der Stützeinheit auf. Die Erstreckungsrichtung der Stützeinheit ist die Verbindungslinie der Auflagestellen, d.h. die Stützeinheit ist im Wesentlichen parallel zur Längsachse der länglichen Last. Wenn die Stützeinheit quer über die Antriebsachse ragt, bedeutet das im beladenen Zustand, dass die längliche Last bzw. deren Längsachse ebenfalls quer über die Antriebsachse ragt. Um ein seitliches Abgleiten oder Abrollen der Last zu verhindern, kann die Stützeinheit mit seitlichen Sicherungsvorsprüngen ausgebildet sein. Die Auflagestellen mit den seitlichen Sicherungsvorsprüngen können beispielsweise von durchgebogenen oder U-förmigen Aufnahmeelementen gebildet sein. Somit befindet sich der Schwerpunkt der Vorrichtung insbesondere im beladenen Zustand im Wesentlichen direkt über der Antriebsachse bzw. dem angetriebenen Rad, jedenfalls aber näher bei der Antriebsachse als bei einer auf der gegenüberliegenden Fahrgestellseite angeordneten Achse. Die Anordnung des Führungsteils ist weitgehend unabhängig von der Stützeinheit frei wählbar. Einziges Kriterium ist, dass der Griffbereich des Führungsteils auf jener Seite der Transportvorrichtung angeordnet ist, auf die die Stützeinheit (und somit eine etwaige Last) über die Antriebsachse ragt. Es kann sich bei dem Führungsteil beispielsweise um eine Stange oder einen Bügel handeln, die auf der Seite der Antriebsachse vom Fahrgestell ausgehen. Da die Antriebsachse auf der Bedienungsseite des Fahrgestells vorliegt, kann die Transportvorrichtung durch Schwenken, d.h. Abwärtsdrücken, des Führungsteils über die Antriebsachse verkippt werden. In dem verkippten Zustand hat lediglich das einzelne angetriebene Rad, welches an der Antriebsachse gelagert ist, Bodenkontakt und bildet somit beim Manövrieren bzw. bei einer Richtungsänderung einen Drehpunkt, um den die Vorrichtung durch seitliche Bewegung des Führungsteils ohne großen Kraftaufwand zum Lenken der Vorrichtung verdreht werden kann. Besonders vorteilhaft ist bei dieser Vorrichtung auch, dass das Fahrgestell auf der Bedienungsseite besonders schmal ist, sodass ein Benutzer beim Schieben oder Ziehen der Vorrichtung die Füsse seitliche neben das Fahrgestell setzen kann und nicht versehentlich an das Fahrgestell anstößt. Die beiden Räder auf der der Bedienungsseite gegenüberliegend Seite dienen dabei der Stabilisierung der Transportvorrichtung. Ein im Rad integrierter Nabenmotor ist nicht nur platzsparend, sondern ermöglicht aufgrund des günstigen Drehmoments einen verhältnismäßig wirtschaftlichen Betrieb der Transportvorrichtung. Außerdem begünstigt er das Bestreben, den Schwerpunkt der Vorrichtung möglichst in die Nähe der Antriebsachse zu legen. Derartige Motoren sind werden in großen Stückzahlen für den Einsatz bei Elektro-Fahrrädern hergestellt und sind daher auch in der Anschaffung relativ günstig. Der Nabenmotor kann zur Anpassung an die Geländebeschaffenheit und Geschwindigkeit mit einem Getriebe ausgestattet sein.

Mit der mit einem Motor verdrehbaren Gabel kann eine Lenkbarkeit bzw. eine Richtungsänderung des Fahrgestells ohne Kippen der Transportvorrichtung erzielt werden, indem der Motor ein entsprechendes Ausschwenken des Antriebsrads bewirkt. Auf diese Weise kann die Antriebsachse in einen Winkel zur zweiten Achse verdreht werden und von einer geraden, zu den freien Rädern parallelen Anordnung ausschwenken.

Eine günstige Hebelwirkung beim Ankippen der Transportvorrichtung kann erzielt werden, wenn sich das Führungsteil in der Betriebsstellung vom Fahrgestell ausgehend über die Antriebsachse hinweg erstreckt.

Zur Reduktion des Gesamtgewichts sowie des Platzbedarfs der erfindungsgemäßen Transportvorrichtung ist es vorteilhaft, wenn das Führungsteil der Stützeinheit zugehörig ist, wobei an dem Führungsteil zumindest ein Last-Aufnahmeelement angeordnet sind. Ein geringes Gesamtgewicht der Transportvorrichtung ist aus mehreren Gründen erstrebenswert: es verlängert die Betriebsdauer des Elektroantriebs und es erleichtert den Transport der Transportvorrichtung zum und vom Einsatzort. Außerdem kann die längliche Last in diesem Fall über das oder die Aufnahmeelemente auf dem Führungsteil liegen. Das ist insbesondere bei Golftaschen zusätzlich deshalb vorteilhaft, da somit die Öffnung der Golftasche in unmittelbarer Nähe des Griffbereichs des Führungsteils angeordnet ist, wodurch ein rasches Umgreifen zwischen Führungsteil und etwaigen Golfschlägern erleichtert wird.

Um das Gesamtgewicht und auch den Platzbedarf der Vorrichtung weiter zu reduzieren, können die frei drehbar gelagerten Räder einen kleineren Durchmesser haben als das angetriebene Rad. Insbesondere kann der Durchmesser der freien Räder je nach erwartetem Untergrund so klein wie möglich und gerade groß genug sein, dass die Vorrichtung nicht bei etwaigen Unebenheiten am Untergrund hängenbleibt. Beim Antriebsrad wird der Durchmesser zweckmäßig mit der Antriebsfunktion und beispielsweise dem erwünschten Drehmoment abgestimmt werden, so dass sich im Allgemeinen für das Antriebsrad ein größerer Durchmesser ergibt.

Es ist günstig, wenn das angetriebene Rad eine im Wesentlichen ebene Lauffläche aufweist. Dabei muss nicht die gesamte Lauffläche des Rades eben sein, aber eine zumindest teilweise ebene Lauffläche erzielt vorteilhaft einen breiteren Auflagestreifen als eine runde Lauffläche. Dadurch wird die Stabilität der Transportvorrichtung, insbesondere in einer gekippten Stellung, verbessert und ein seitliches Umkippen erschwert. Die Bereifung kann aus Vollgummi oder Kunststoff hergestellt sein oder es kann eine herkömmliche Fahrrad-Bereifung mit Felge und Speichen, aber mit kleinerem Raddurchmesser als bei Fahrrädern, zur Anwendung kommen.

Ein platzsparender Transport der Transportvorrichtung zum Einsatzort, beispielsweise zu einem Golfplatz, wird ermöglicht, wenn das Fahrgestell und das Führungsteil in eine Transportstellung zusammenklappbar sind, wobei in der zusammengeklappten Transportstellung das Führungsteil im Wesentlichen parallel zu einem die Achsen verbindenden Basisteil angeordnet ist, und wobei das Führungsteil bevorzugt selbst durch ein Klappgelenk geteilt und faltbar ist. Der Platzbedarf der Transportvorrichtung ist somit im Wesentlichen auf die Grundfläche des Fahrgestells und in der Höhe beinahe auf den Durchmesser des Antriebsrads reduziert.

Bevorzugt sind die nicht angetriebenen Räder mit ihrer Achse abnehmbar verbunden und am Fahrgestell Hilfsachsen bzw. Achsenstummel zur platzsparenden Befestigung der nicht angetriebenen Räder in der Transportstellung vorgesehen. In diesem Fall können die nicht angetriebenen Räder vom Fahrgestell abgenommen und parallel zu einer Längserstreckung des Fahrgestells untergebracht werden, so dass das Packmaß der Transportvorrichtung in einer Transportstellung weiter reduziert ist.

Betreffend die Stromversorgung des Antriebsrades hat es sich als vorteilhaft herausgestellt, wenn am Fahrgestell eine Antriebsbatterie im Wesentlichen in einer Ebene mit den Achsen angeordnet ist. Somit kann die Batterie, die je nach Betriebsdaueranforderung einen signifikanten Gewichtsanteil der Transportvorrichtung beansprucht, in Bodennähe untergebracht sein, was den Schwerpunkt der Vorrichtung senkt und folglich die Stabilität verbessert.

Zur Steuerung des Antriebs bzw. einer Antriebsgeschwindikeit kann eine einfach Bedienung der Transportvorrichtung dadurch erzielt werden, dass im Griffbereich ein Steuergriff zur Einstellung der Geschwindigkeit des angetriebenen Rads angeordnet ist.

Da es in vielen Anwendungen, insbesondere beim Zurücklegen größerer Distanzen und bei regelmäßig großen Entfernungen von etwaigen Ladestationen, nützlich ist, einen Indikator für die verbleibende Reichweite bereitzustellen, kann im Griffbereich der Transportvorrichtung eine Anzeige zur Visualisierung des Batterieladestands einer Antriebsbatterie angeordnet sein.

Wenn die verdrehbare Gabel von einer Steuerungseinrichtung mit einem Lenkantrieb schwenkbar ist, wobei die Steuerungseinrichtung auch zur Steuerung des Antriebsrades eingerichtet ist, kann ein Zusammenspiel der beiden Antriebe beispielsweise dahingehend erzielt werden, dass die Antriebsgeschwindigkeit bei eingeschlagener Antriebsachse reduziert wird, um ein Umkippen der Transportvorrichtung zu verhindern.

In diesem Zusammenhang ist es besonders vorteilhaft, wenn die Steuerungseinrichtung mit einem drahtlosen Empfänger zur Fernsteuerung verbunden ist. In diesem Fall kann die Transportvorrichtung über eine Fernsteuerung vom Benutzer gesteuert werden und ein manuelles Nachziehen oder Schieben kann unterbleiben.

Eine noch komfortablere Steuerung ist erzielbar, wenn die Steuerungseinrichtung mit einem GPS-System und bevorzugt mit am Fahrgestell angeordneten Abstandssensoren zur Erkennung von Hindernissen verbunden ist. Solcherart ausgestattet kann die Transportvorrichtung selbstständig bestimmte Punkte, beispielsweise Stationen auf einem Golfplatz, anfahren oder Markierungen, beispielsweise in einem Golfball, selbstständig folgen. Mithilfe der Abstandssensoren können Kollisionen mit Hindernissen oder Golfspielern vermieden werden und es ist beispielsweise ein Verfolgungsmodus realisierbar, wobei die Transportvorrichtung einem Benutzer in einem vorgegebenen Abstand folgt.

Die Erfindung wird nachfolgend anhand von besonders bevorzugten Ausführungsbeispielen, auf die sie jedoch nicht beschränkt sein soll, und unter Bezugnahme auf die Zeichnung noch weiter erläutert. In der Zeichnung zeigen dabei im Einzelnen:
Fig. 1 eine perspektivische Ansicht der erfindungsgemäßen Transportvorrichtung in einer Betriebsstellung;
Fig. 2A eine Ansicht wie in Fig. 1, jedoch mit offenem Batteriefach;
Fig. 2B eine perspektivische Ansicht der erfindungsgemäßen Transportvorrichtung aus einem anderen Blickwinkel mit offenem Batteriefach und mit zwei zusätzlichen Laufrädern;
Fig. 3A-D jeweils eine Seitenansicht der erfindungsgemäßen Transportvorrichtung gemäß Fig. 1 beim Übergang von einer Betriebsstellung (Fig. 3A) in eine Transportstellung (Fig. 3D);
Fig. 4 eine perspektivische Ansicht eines Teils der erfindungsgemäßen Transportvorrichtung mit einer in einer verdrehbaren Gabel gelagerten Antriebsachse;
Fig. 5 eine Seitenansicht einer weiteren Variante der erfindungsgemäßen Transportvorrichtung mit einer Golftasche; und
Fig. 6 eine Draufsicht auf die Transportvorrichtung gemäß Fig. 5 mit nur teilweise abgebildeter Golftasche.

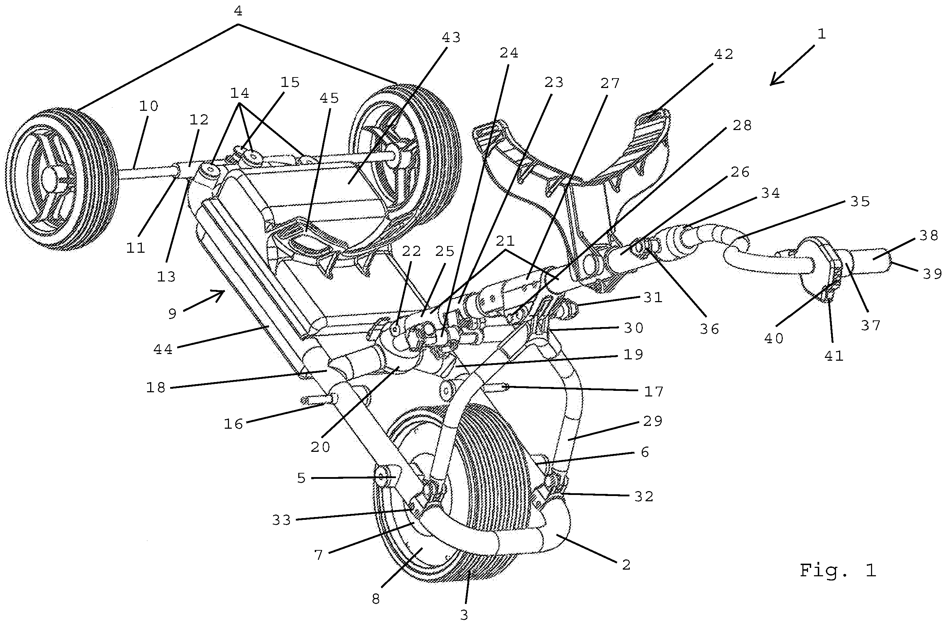

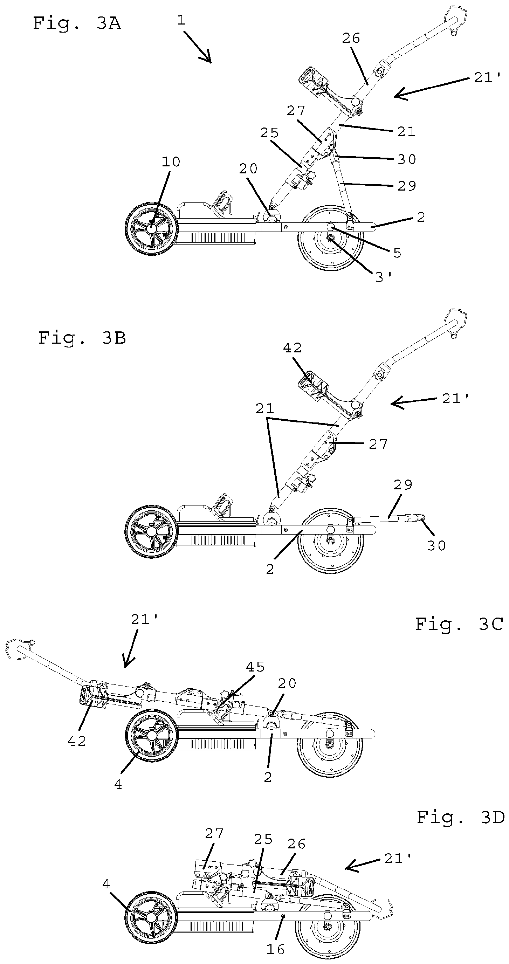

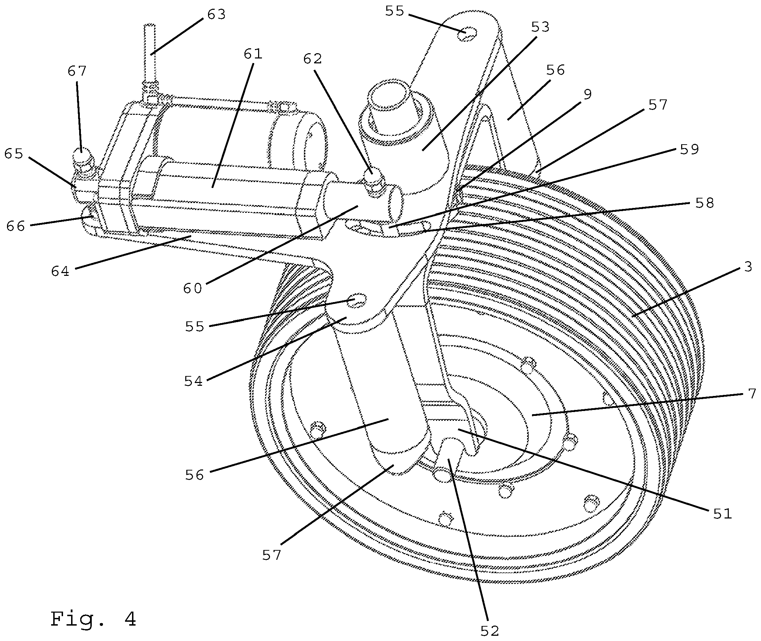

Fig. 1 zeigt eine Transportvorrichtung 1 mit einem Fahrgestell 2 und einem auf einer Antriebsachse 3' (vgl. Fig. 3A) gelagerten Antriebsrad 3 sowie zwei nicht angetriebenen Rädern 4. Das Fahrgestell 2, hier auch Rahmen genannt, kann unter Verwendung von verschiedenen Materialien zusammengebaut werden. Einerseits können Kunststoff- oder Metallmaterialien in Form von Rohren oder Formrohren verwendet werden oder aber auch Kombinationen von unterschiedlichen Materialien wie Kunststoff, Edelstahl, Stahl, Buntmetalle, Leichtmetalle, textilverstärkte Materialien wie z.B. Rohre aus Carbonfasern. Beim Zusammenbau wird das Fahrgestell 2 einfach zusammengesteckt, verschraubt, verklebt, gelötet oder geschweißt. Auch Kombinationen der zuvor genannten Verbindungsmöglichkeiten sind möglich. Am Fahrgestell oder Rahmen 2 wird über zwei Aufnahmestücke 5, 6, welche mit dem Rahmen 2 verbunden ist, das Antriebsrad 3 angebracht. Über die Aufnahmestücke 5, 6 kann auch eine Radhalterung in Form einer drehbaren Brückenkonstruktion am Fahrgestell oder Rahmen 2 angebracht werden (vgl. Fig. 4).

Das Antriebsrad 3 besteht im Wesentlichen aus einem zylindrisch gestalteten ringförmigen Trägerkörper, welcher mit einer Gummierung versehen werden kann. Im Inneren des zylindrischen Trägerkörpers ist zentrisch der Antriebsmotor 7, ein Nabenmotor, untergebracht und über Zwischenscheiben 8 oder Speichen mit dem zylindrischen Trägerkörper des Antriebsrades 3 verbunden. Der Antriebsmotor 7 ist somit vorzugsweise als Nabenmotor ausgeführt, wobei der Stator des Antriebsrades 3 über die Aufnahmestücke 5, 6 mit dem Fahrgestell bzw. Rahmen 2 über Schraub- oder andere Fixierungsvorrichtungen verbunden ist. Ein vom Nabenmotor 7 ausgehendes Spannungs-, Versorgungs- und Regelungskabel (nicht dargestellt) tritt aus dem Nabenmotor 7 aus und kann über eine Bohrung im Fahrgestell 2 im Inneren zu einer elektrischen Versorgungs- und Steuereinrichtung 9 geführt werden. Der Einbauort des Antriebsrades 3 wird als bedienungsseitiger Einbauort mit Bezug auf das Fahrgestell bzw. den Rahmen 2 bezeichnet. Anstelle des Nabenmotors 7 sind selbstverständlich auch andere Einzelrad-Antriebe denkbar.

Im gemäß der Darstellung in der Zeichnung hinteren, beim Schieben der Vorrichtung 1 vorderen Bereich des Fahrgestells bzw. Rahmens 2, also dem Antriebsrad 3 gegenüberliegend, können über eine Welle 10 zur Balance der Vorrichtung 1 zwei weitere nicht angetriebene Räder 4 aufgesteckt werden. Das Aufstecken kann derart geschehen, dass die Radwelle 10 an den jeweiligen Enden mit Nuten versehen ist. In diese Nuten können dann Radfixiervorrichtungen, welche in den Rädern 4 untergebracht sind, einrasten. Die Radwelle 10 ist in einer Kunststoffführungsbuchse 11 verschiebbar gelagert, wobei die Kunststoffführungsbuchse 11 in einem Trägerkörper 12 eingebaut und fixiert ist. Der Trägerkörper 12 - ausgeführt in diesem Falle als Platte 13 - wird an dem Fahrgestell bzw. Rahmen 2 im vorderen Rahmenbereich mit Befestigungseinrichtungen 14 verschraubt und fixiert. Die Fixierung der Kunststoffführungsbuchse 11 und des Trägerkörpers 12 kann auch über Löten, Schweissen oder Kleben erfolgen oder die Kombination Kunststoffführungsbuchse 11 und Trägerkörper 12 kann auch gleich mit dem Fahrgestell bzw. Rahmen 2 mitgefertigt werden. Mit einem Fixierstift 15 wird die Radwelle 10 gegen seitliches Verschieben gesichert.

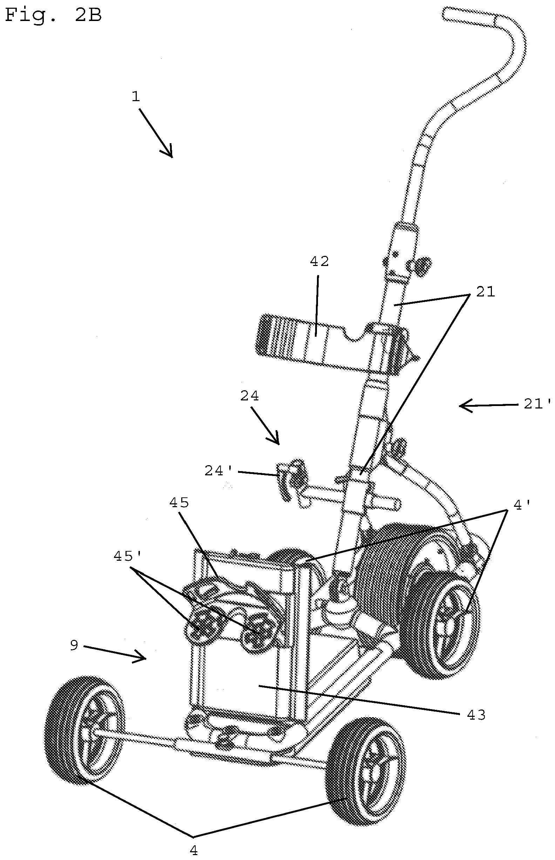

Der Fixierstift 15 hat auch die Aufgabe, das Fahrgestell bzw. den Rahmen 2 zerlegbar zu machen. Dies geschieht, indem man eines der Räder 4 von der Radwelle 10 aus der Nutverbindung löst; in der Folge wird der federgeführte Fixierstift 15 angehoben und die Radwelle 10 kann aus der Kunststoffführungsbuchse 11 abgezogen werden. Um ein relative kleines Verpackungs- und Transportmaß zu erreichen, kann auch das auf der Radwelle 10 verbliebene Rad 4 über die Nutverbindung gelöst werden und in einem Transportkoffer (hier nicht dargestellt) untergebracht werden. Zusätzlich kann die von den Rädern 4 befreite Radwelle 10 in dem Transportkoffer verstaut werden. Eine weitere Möglichkeit des Verstauens der Räder 4 besteht darin, dass abgezogen die Räder 4 an Haltebolzen 16, 17 am Fahrgestell 2 angebracht werden und damit nicht verloren gehen können. Die Haltebolzen 16, 17 können auch dafür verwendet werden, dass das Fahrgestell bzw. der Rahmen 2 neben dem Antriebsrad 3 und den Vorderrädern 4 mit zusätzlichen Hilfsräder (vgl. Fig. 2B)) bestückt werden kann. Die Hilfsräder können ohne Antrieb ausgeführt sein oder aber einen Motor und oder Getriebemotor als Antrieb haben.

Im Fahrgestell bzw. Rahmen 2 sind Rahmenabzweiger 18, 19 verbaut, die in Form von T-Stücken oder Gabelungen eine Verbindung zu einem zentralen Lager 20 herstellen. Zur Überbrückung der Distanz zwischen den Rahmenabzweiger 18, 19 und dem Lager 20 kann ein Verbindungsstück eingebaut werden. Das Lager 20 kann Y-förmig gestaltet sein oder aber als Bauteil so konstruktiv ausgelegt sein, dass die Y-Verbindung im Inneren des Lagers 20 liegt und somit nicht sichtbar ist. Zweck des Lagers 20 ist, die Rahmenabzweiger 18, 19 mit einem Führungsteil in Form einer Stange 21 zu verbinden, wobei die Führungsstange 21 in einem Gelenk 22 gelagert ist und die Gegenseite des Gelenkes 22 im Lager 20 fixiert ist. Die Fixierung kann durch Einpressen, Kleben, Schweißen, Löten oder sonstige mechanische Verbindung erfolgen.

Auf der Führungsstange 21 kann eine Fixiervorrichtung 23 angebracht werden. Die Fixiervorrichtung 23 dient zum Fixieren von mitnehmbaren Teilen wie Schirmen, Halterungen jeglicher Art oder zum Fixieren einfacher Sitzmöglichkeiten. Die Fixiervorrichtung 23 kann einerseits entlang der Führungsstange 21 verschoben und fixiert werden und besitzt andererseits einen verschiebbaren Aufnahmeteil 24, über welchen zuvor erwähnte Gegenstände fixiert werden können. Die Verschiebung und Fixierung kann mit Schraub-, Dreh- oder Klemmvorrichtungen durchgeführt werden. Beim Einsatz eines Sonnen- oder Regenschirms kann beispielsweise eine Schirmstange am Boden abgestellt oder wenige Zentimeter in den Boden gedrückt und mit der Fixiervorrichtung 23 verbunden werden. Somit kann ein Umkippen des Schirms verhindert werden und eine Mitnahme auf der Transportvorrichtung 1 kann durch leichtes Hochziehen des Schirms vor der Betätigung des Antriebs erreicht werden.

Die Führungsstange 21 ist in einen unteren Abschnitt 25 und einen oberen Abschnitt 26 geteilt, welche Abschnitte 25, 26 über ein Fixierteil 27 verbunden sind. Das Fixierteil 27 ist dabei seinerseits geteilt, wobei die Teile schwenkbar über eine Achse 28 verbunden sind. Durch die Achse 28 kann die Führungsstange 21 zusammengeklappt und damit die Transportvorrichtung 1 insgesamt zu einem sehr kleinen Packmaß zusammengelegt werden. Die mechanische Unterstützung und Positionshalterung der Führungsstange 21 im unteren Abschnitt 25 sowie im oberen Abschnitt 26 erfolgt über das Fixierteil 27, wobei ein an einer Unterstützungsgabel 29 angebrachtes Eingriffstück 30 direkt in das Fixierteil 27 eingreift und mit einer Verriegelungseinrichtung 31 fixiert wird. Damit werden die Führungsstange 21 und die Unterstützungsgabel 29 formschlüssig miteinander verbunden. Die Unterstützungsgabel 29 ist auf beiden Seiten über Verbindungskörper 32, 33 mit dem Fahrgestell bzw. Rahmen 2 verbunden. Die Verbindungskörper 32, 33 sind so ausgeführt, dass die Unterstützungsgabel 29 nach vorne und hinten geklappt werden kann, um wiederum ein sehr geringes Packmaß zu erreichen.

Der obere Abschnitt 26 der Führungsstange 21 endet in einem weiteren Fixierteil 34, wobei in diesem Fixierteil 34 ein verschiebbarer geformter Griffbügel 35 aufgenommen ist. Der Griffbügel 35 ist mit Bohrungen oder Nuten versehen. Wenn eine Verschiebung des Griffbügels 35 stattfinden soll, kann die Position des Griffbügels 35 im Fixierteil 34 eingestellt und fixiert werden. Dies kann durch eine entsprechende Rastvorrichtung 36 erfolgen.

Wie aus Fig. 1 ersichtlich, ist die Antriebsachse 3' die dem Griffbügel 35 am nächsten liegende Achse (die Achse 10' der Welle 10 liegt weiter weg), so dass bei einem Druck auf den Griffbügel 35, der beispielsweise unter Einsatz des Körpergewichts eines Benutzers leicht aufgebracht werden kann, ein Kippen der Transportvorrichtung 1 über das Antriebsrad 3 erreicht werden kann.

Am Ende des Griffbügels 35 ist ein Steuergriff 37 vorgesehen. Ein Griff 38 kann so am Griffbügel 35 ausgeführt sein, dass ein Schlüsselschalter 39 integriert ist. Der Steuergriff 37 kann mehrere funktionale Anzeigen und Steuerungen 40 enthalten und kann mit einer Stopp-Taste oder Tempomat-Taste 41 ausgestattet sein. Der Steuergriff 37 wird zumeist als Multifunktionsgerät mit Tempomat und Batterieüberwachung hergestellt. LEDs dienen zur Überwachung des Ladezustandes einer Batterie zur Versorgung des Antriebsmotors 7. Mit sinkender Akkuspannung geht ein Lämpchen nach dem anderen aus. Die Leistung des Motors / Getriebemotors 7 lässt sich mit dem Steuergriff 37 stufenlos von 0 bis 100% einstellen. Wie bei üblichen Gasgriff-Reglern sorgt eine Rückholfeder dafür, dass sie beim Auslassen wieder von selbst in die Nullstellung zurückspringen. Das bedeutet auch, dass sie wie bei einem Motorrad gehalten werden müssen, um ein bestimmtes Tempo zu halten. Will man eine Fixierung einer bestimmten Geschwindigkeit erreichen, kann man einerseits die Rückholfeder ausbauen oder aber einen Steuergriff 37 mit Tempohaltefunktion einsetzen. Bei Steuergriffen 37 bzw. Gasgriffmodellen, welche die Funktionalität der Tempohaltefunktion anbieten, kann durch Drücken eines Tasters die momentane Leistung des Motors 7 elektronisch "eingefroren" werden, auch wenn der Steuergriff 37 losgelassen wird. Das Lösen des Tempomaten erfolgt dabei vom Controller, d.h. die Leistung wird abgeschaltet, wenn wiederum der Tempomatknopf gedrückt wird.

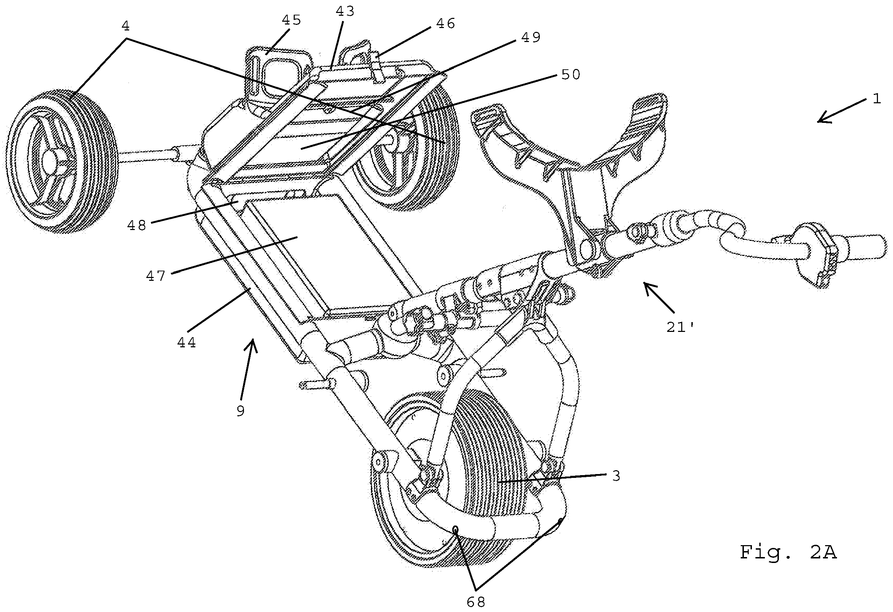

Zur Halterung von Lasten bzw. Gebrauchsgegenständen, wie z.B. Golftaschen, Einkaufstaschen, Kisten etc., kann am oberen Abschnitt 26, gegebenenfalls am unteren Abschnitt 25, der Führungsstange 21 ein Aufnahmeelement 42 angeordnet sein, welches einerseits fix montiert oder verschiebbar und drehbar ausgeführt sein kann. Im linken (vorderen) Bereich des Fahrgestells bzw. Rahmens 2 ist die Steuerungs- und Stromversorgungseinheit 9 untergebracht. Die Steuerungs- und Stromversorgungseinheit 9 besteht gemäß Zeichnung aus einem teilbaren Gehäuse mit Deckel 43 und einem Gehäuseboden 44, welcher im Fahrgestell bzw. Rahmen 2 eingebaut ist. Diese Einbaulage ist nur eine von vielen Möglichkeiten, sodass auch andere Einbaulagen möglich sind. Der Gehäusedeckel 43 ist so ausgeführt, dass eine Abstützvorrichtung 45 angebracht werden kann, welche als zusätzliche Abstützung zum Aufnahmeelement 42 verwendbar ist. Somit bildet die Führungsstange 21 gemeinsam mit dem Aufnahmeelement 42 und der Abstützvorrichtung 45 eine Stützeinheit 21' (vgl. Fig. 2A) zur Aufnahme einer Golftasche, wobei die beiden Auflagestellen der Stützeinheit 21' durch die Abstützvorrichtung 45 einerseits und durch das Aufnahmeelement 42 andererseits gebildet sind. Das Aufnahmeelement 42 bildet aufgrund seiner U-förmigen Ausbildung die seitlichen Sicherungsvorsprünge der Stützeinheit 21'. Im beladenen Zustand, d.h. mit einer Golftasche, befindet sich der Schwerpunkt der Transportvorrichtung 1 direkt über dem Lager 20.

Figur 2A und 2B zeigen das Fahrgestell bzw. den Rahmen 2 mit geöffneter Steuerungs- und Stromversorgungseinheit 9. In dieser Ausführung liegt der Gehäuseboden 44 auf dem Fahrgestell 2 auf und ist vorzugsweise auch auf diesem fixiert. Über einen Druckverschluss 46 kann der Gehäusedeckel 43 vom Gehäuseboden 44 abgehoben und das Gehäuse geöffnet werden. Im Inneren der Steuerungs- und Stromversorgungseinheit 9 sind eine Stromversorgungsquelle 47, eine Steuerungseinheit 48 sowie ein Ladegerät 49 untergebracht. Die Steuerungseinheit 48 sowie das Ladegerät 49 können in dem Gehäuse so untergebracht sein, dass eine entsprechende Abdeckung 50 für zusätzlichen Schutz und Trennung sorgt.

Im Gehäuseboden 44 sind Kabelausgänge der Steuerungseinheit 48 bzw. des Controllers untergebracht, die in das Fahrgestell 2 münden. Controllerkabel (Verbindungen) werden über die Rahmenabzweiger 18, 19, das Lager 20 und die Führungsstange 21 dem Griffbügel 35 bzw. dem Steuergriff 37 und dem Schlüsselschalter 39 zugeführt. Eine weitere Kabelverbindung zwischen Controller 48 und Antriebsrad 3 sowie Nabenmotor 7 wird ebenfalls über den Gehäuseboden 44 und den Rahmen 2 dermaßen hergestellt, dass etwa im Bereich eines der Aufnahmestücke 5, 6 des Antriebsrades 3 im Rahmen 2 eine Austrittsöffnung geschaffen ist.

Um einem seitlichen Kippen der Transportvorrichtung 1 entgegenzuwirken, ist die Laufffläche des Antriebsrads 3 eben (nicht bombiert) und nicht zu schmal ausgebildet. Für eine Richtungsänderung bei einem nicht schwenkbar im Rahmen 2 gelagerten (wie in Fig. 4 gezeigt) Antriebsrad 3, beispielsweise zum Umfahren von Hindernissen oder Unebenheiten, kann ein Anheben der Vorderräder 4 notwendig sein. Bei einer zu schmalen ebenen Lauffläche des Antriebsrades 3 oder bei einer bombierten Laufflächen könnte ein Kippen der nicht angetriebenen Räder 4 nach links oder rechts über die Kippkante des Antriebsrades 3 erfolgen. Um dem vorzubeugen, wurden beim erfindungsgemäßen Fahrgestell 2 Antriebsräder 3 mit einer ebenen Lauffläche getestet. Die Lauffflächen können aus Metall, Kunststoffen, vulkanisierten Gummimaterialien sein. Auch können die Laufflächen profiliert ausgeführt werden, oder aber es können auch hervorstehende Profile in die Lauffläche eingebaut werden, damit eine bessere Bodenhaftung bzw. Bodeneingriff gewährleistet wird.

Zur Festlegung der Geometrie des Fahrgestells 2 wurden durch Anfertigung verschiedener Durchmesser und Breiten des Antriebsrades 3 die bevorzugten Abmessungen empirisch ermittelt. Auch die Ausgestaltung der Oberfläche wurde bei den Versuchen berücksichtigt. Das heisst wenn die Breite des Antriebsrades 3 bzw. dadurch die Auflagefläche gegen Null geht, z.B. durch bombierte Antriebsradoberflächen, erfolgt ein schnelles seitliches Kippen des Fahrgestells 2 über die Kippkante des Antriebsrades 3. Aus den Versuchen zur Festlegung der geometrischen Beziehungen des Antriebsrades 3 wie Durchmesser und Breite lässt sich ableiten, dass für eine gute Balance des Antriebsrades 3 die Breite ein bestimmtes Maß nicht unterschreiten darf.

Aus den emprischen und konstruktiven Überlegungen ergeben sich zweckmäßigerweise Antriebsräder 3 mit einem minimalen Durchmesser von 120 mm bis max. 300 mm, wobei das Duchmesser / Breitenverhältnis des Antriebsrades 3 Werte zwischen 0,6 und 3,25, bevorzugt zwischen 0,8 und 2,5, annehmen kann.

Durch die empirisch ermittelten Durchmesser / Breitenverhältnisse des am Fahrgestell 2 hinten angebrachten Antriebsrades 3, sowie die im vorderen Bereich des Fahrgestells 2 angebrachten beiden Vorderräder 4 wird die Fahrstabilität gegenüber herkömmlichen Fahrgestellen, bei welchen im hinteren Bereich zwei Antriebsräder vorgesehen sind, wesentlich verbessert. Das Fahrgestell 2 bleibt stabil und ist zuverlässig gegen Kippen geschützt. Die Bodenhaftung und Kurvensicherheit, Neigungswinkel und Steigungswinkel sind durch das beschriebene Fahrgestell 2 wesentlich verbessert.

In Fig. 2B ist die Transportvorrichtung 1 aus einer gegenüber Fig. 2A etwa um 90° verdrehten Ansicht, ebenfalls mit offenem Batteriefach dargestellt. Der Deckel 43 des Gehäuses der Steuerungs- und Stromversorgungseinheit 9 ist bei dieser Variante im Wesentlichen flach. An der Oberseite des Deckels 43 ist eine Abstützvorrichtung 45 angeordnet, welche zwei ungefähr halbrunde Stützzungen 45' und eine zentrale Durchgangskerbe aufweist. Die Stützzungen 45' sind mit einem Profil versehen, um einem Abrutschen der gestützten Last entgegenzuwirken.

An den Haltebolzen 16, 17 am Fahrgestell 2 sind zwei zusätzliche Räder 4' an den Haltebolzen 16, 17 des Rahmens 2 frei drehbar gelagert, so dass die Transportvorrichtung 1 insgesamt fünf Räder 3, 4, 4' aufweist. Die vier frei drehbar gelagerten Räder 4, 4' sind allesamt abnehmbar. Die beiden zusätzlichen Räder 4' unterstützen das Fahrgestell 2 in der Nähe des Antriebsrads 3, sodass das Antriebsrad 3 teilweise entlastet wird. Der Durchmesser und die Achsenlage der zusätzlichen Räder 4' sind gegenüber dem Antriebsrad 3 so gewählt, dass ihre Auflagefläche in einer Ebene mit jener des Antriebsrads 3 und der anderen frei drehbar gelagerten Räder 4 liegt und somit alle fünf Räder 3, 4, 4' gleichzeitig Bodenkontakt haben. Bei hohen Lasten auf dem Fahrgestell 2 verteilt sich das Gewicht demzugfolge vorteilhaft auf alle fünf Räder 3, 4, 4'. Um zu verhindern, dass das Antriebsrad 3 eine Bodenhaftung verliert, können die zusätzlichen Räder 4' bzw. deren Achsen beweglich, beispielsweise über Federbeine (nicht dargestellt), mit dem Fahrgestell 2 verbunden sein. Dadurch können die zusätzlichen Räder 4' nachgeben, wenn eines oder beide Räder 4' beipsielsweise auf eine Unebenheit im Gelände auffahren und das Fahrgestell somit angehoben wird. Alternativ oder zusätzlich kann auch das Antriebsrad 3 bzw. dessen Achse 3' so gelagert sein, dass es den Bodenkontakt auch dann noch behält, wenn das Fahrgestell leicht vom Boden abgehoben wird, was z.B. mittels einer Federlagerung der Achse 3' erzielt werden kann.

Der verschiebbare Aufnahmeteil 24 ist in Fig. 2B mit einem Schnellspanner 24' ausgestattet, so dass das Einspannen und Lösen, beispielsweise eines Schirms, besonders einfach durchzuführen ist. Wie hier besonders gut erkennbar ist, erstreckt sich der Aufnahmeteil 24 seitlich ein Stück weit von der Stützeinheit 21' bzw. der Führungsstange 21 weg, so dass ein darin aufgenommener Schirm nicht mit einer in der Stützeinheit 21' angeordneten Last kollidiert.

Fig. 3A bis Fig. 3D zeigen die Transportvorrichtung 1 gemäß Fig. 1 in verschiedenen Stellungen, wobei insbesondere die relative Anordnung von Fahrgestell 2, unterem Abschnitt 25 und oberem Abschnitt 26 der Führungsstange 21 sowie der Unterstützungsgabel 29 in den einzelnen Figuren unterschiedlich ist: In Fig. 3A befindet sich die Transportvorrichtung 1 in der in Fig. 1 gezeigten Betriebsstellung. Die Abschnitte 25, 26 der Führungsstange 21 sind durch das Fixierteil 27 fest miteinander verbunden und die Unterstützungsgabel 29 bzw. deren Eingriffstück 30 ist im Fixierteil 27 aufgenommen und fixiert. Der untere Abschnitt 25 bildet mit der Unterstützungsgabel 29 und dem Rahmen 2 eine Dreiecksverbindung, so dass die Führungsstange 21 mit dem Rahmen 2 einen festen Winkel einschließt.

Zum Falten bzw. Zusammenklappen der Transportvorrichtung wird die Verbindung zwischen Eingriffstück 30 und Fixierteil 27 gelöst, indem die Verriegelungseinrichtung 31 entriegelt wird. Sodann kann die Unterstützungsgabel 29 nach rechts (nach hinten), von der Führungsstange 21 weg, geklappt werden, so dass sie im Wesentlichen parallel zum Rahmen 2 liegt, wie in Fig. 3B dargestellt ist.

Bei der in Fig. 3C gezeigten Stellung ist die nunmehr lediglich über das Lager 20 schwenkbar mit dem Rahmen 2 verbundene Führungsstange 21 nach vorne über die Achse der nicht angetriebenen Räder 4 geklappt. Dabei liegt die Führungsstange 21 in einer zentralen Ausnehmung der Abstützvorrichtung 45 (vgl. Fig. 1).

Außerdem ist das (obere) Aufnahmeelement 42 an die Führungsstange 21 angeklappt.

Fig. 3D zeigt schließlich eine komplett zusammengeklappte Transportstellung der Transportvorrichtung 1, wobei ausgehend von der in Fig. 3C gezeigten Stellung noch das Fixierteil 27 entriegelt und der obere Abschnitt 26 der Führungsstange 21 über deren unteren Abschnitt 25 geklappt ist. Zusätzlich könnten die beiden vorderen Räder 4 von ihrer Achse abgenommen und an den Haltebolzen 16, 17 (in Fig. 3D ist nur der Haltebolzen 16 ersichtlich) angebracht werden.

In Fig. 4 ist die Antriebsrad-Einheit gemäß einer Variante gezeigt, wobei das Antriebsrad 3 in einer Brückenkonstruktion 54 schwenkbar gelagert ist und über einen Motor 61, z.B. einen Getriebemotor, in eine Dreh- oder Lenkbewegung versetzt werden kann. Das Antriebsrad 3 ist mit einer gabelförmig ausgebildeten Vorrichtung 51 über die Radachsen 52 fest verbunden. Die gabelförmig ausgebildeten Vorrichtung 51 ist über ein Lager 53 in die Brücke 54 eingebaut, wobei das Lager 53 durch einen Schraubverschluss an der Brücke 54 gehalten wird. Die Brücke 54 wird über Schraubverbindungen 55 und Abstandshalter 56 sowie Anbindungsstücke 57 an dem Fahrgestell oder Rahmen 2 (vgl. Fig. 1) befestigt. Die Brücke 54 ist mit einem bogenförmigen Schlitz (Kulisse) 58 ausgestattet, in welchen ein Bolzen 59 als Lenk- und Steuerhebel eingreift, der mit der Gabel-Vorrichtung 51 verbunden ist. Der Bolzen 59 wird durch einen Kolben 60 des z.B. als Linearmotor ausgeführte Motors 61 durchgeführt und mit einer Befestigungsvorrichtung 62 gesichert.

Der Linearmotor 61 ist elektrisch über ein Anschlusskabel 63 an die Steuerungs- und Stromversorgungseinheit 9 angeschlossen. Auf der Brücke 54 kann zur Unterstützung des Linearmotors 61 noch eine Gleitplatte 64 angebracht sein. Gleitplatten bestehen üblicherweise aus technischen Kunststoffen und können falls notwendig auch geschmiert sein. Der Linearmotor 61 ist über einen hinteren Teil einer Hubstange 65 mit einem Befestigungsbolzen 66, welcher als Gleit-und Rotationslager wirkt, verbunden, wobei ein Sicherungselement 67 die kraftschlüssige Verbindung herstellt. Auf der Brücke 54 können noch Messelemente (nicht gezeigt) für Stellungsmessungen des Kolbens 60 angebracht sein, damit die Stellung des Kolbens 60 überwacht werden kann. Die Lageerfassung des Kolbens 60 kann auch im Motor 61 selbst über eingebaute Hall Sensoren erfolgen.

Wird dem Linearmotor 61 über das Steuerkabel 63 ein Bewegungssignal gesendet, so kann der Kolben 60 entweder einen Hub nach vorne oder, wenn ein gegenläufiges Signal gesendet wird, zurück bewegt werden. Durch die Verbindung mit dem Bolzen 59 wird dieser in der Kulisse 58 nach vor oder zurück bewegt. Durch den kurvenförmigen Verlauf der Bewegung wird das Antriebsrad 3 nach rechts oder links ausgeschwenkt und kann so zur Richtungsänderung beitragen. Durch den kurvenförmigen Bewegungsablauf schwenkt der Linearmotor 61 um den Befestigungsbolzen 66.

Es ist klar, dass die horizontale Anordnung des Linearmotors 61 nur eine mögliche Ausführungsform darstellt. Ein über der Lagerung vertikal angebrachter Motor könnte ebenfalls zur Verschwenkung und Steuerung des Antriebsrades 3 verwendet werden.

Durch die Steuerung des Antriebsrades 3 mittels Linearmotor 61 und Abgreifen der Positionen des Kolbens 60 des Linearmotors 61 kann ein Autopilotsystem für z.B. Golf-Trolleys aufgebaut werden. An sich sind Autopilotsysteme bereits bekannt, wobei das Autopilotsystem über ein Netzwerk mit einer Stromquelle, einer Kurssteuerungseinheit (Course Compute Unit - CCU), einer elektrischen Steuereinheit (Electronic Control Unit - ECU) und der Antriebseinheit (Linearmotor) verbunden ist. Solche Autopilotsysteme können zum Halten und Steuern des Fahrkurses verwendet werden. Damit ein Autopilotsystem eingebaut werden kann, muss das Fahrgestell 2 das Linearkolbenpositionsfeedback an das elektronische Steuergerät (ECU) senden können. Bedingt durch die Netzwerkfähigkeit solcher Systeme können die Autopilot-Steuerkursdaten an andere Geräte weitergegeben und verwendet werden.

Zusätzlich zu den GPS Autopilotsystemen können noch an sich herkömmliche und daher nicht näher zu beschreibende, auf dem Reflexionsprinzip beruhende, Ein- oder Mehrkanal Ultraschallsensoren 68 oder optische Sensoren im Fahrgestell 2 integriert sein (vgl. Fig. 2), damit sich das Fahrgestell 2 bezüglich möglicher Hindernisse orientieren kann bzw. das Erkennen der Fahrzeugposition erleichtert wird. Diese Sensoren senden und empfangen Ultraschallsignale und übermitteln die gewonnenen Daten an das Steuergerät, welches nun aus der Ultraschallsignallaufzeit die Distanz vom Sensor zum Hindernis errechnet. Wird ein Hindernis erkannt und eine einzuhaltende Minimaldistanz unterschritten, so kann über das errechnete Signal der Antriebsmotor 7 gestoppt und der Linearantrieb 61 entsprechend gesteuert werden.

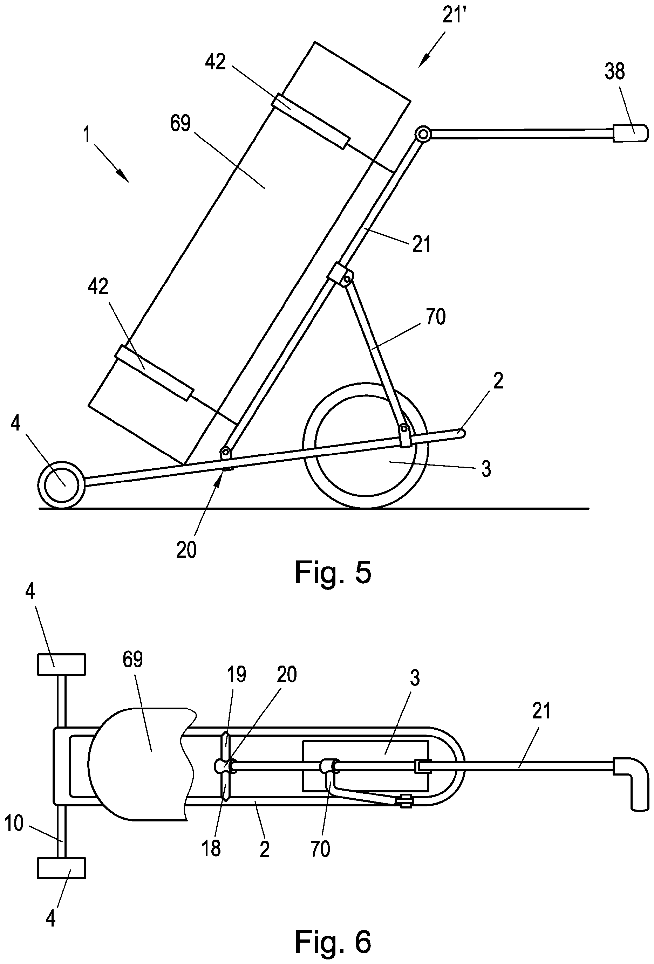

In Fig. 5 ist eine Seitenansicht einer weiteren Variante der erfindungsgemäßen Transportvorrichtung 1 schematisch mit einer Golftasche 69 dargestellt. Die Golftasche 69 ist von zwei Last-Aufnahmeelementen 42 gehalten, welche an einem Führungsteil 21 befestigt sind. Das Führungsteil 21 ist einerseits über ein Lager 20 verschwenkbar mit einem Fahrgestell 2 verbunden und andererseits über ein Unterstützungsteil 70 am Fahrgestell 2 abgestützt. Am oberen Ende des Führungsteils 21 ist ein Griff 38 angeordnet und definiert eine Bedienungsseite der Transportvorrichtung 1. Im Bereich unterhalb der vom Führungsteil 21 und den Aufnahmeelementen 42 gebildeten Stützeinheit 21' ist ein elektrisch angetriebenes Rad 3 am Fahrgestell 2 gelagert. Auf einer der Bedienungsseite gegenüberliegenden Seite sind am Fahrgestell 2 zwei kleinere Räder 4 frei drehbar gelagert.

In der Draufsicht in Fig. 6 ist die Golftasche 69 nur teilweise abgebildet. Die beiden frei drehbar gelagerten Räder 4 sind auf einer Welle 10 aufgesteckt. In dieser Ansicht ist erkennbar, dass das Unterstützungsteil 70, welches das Führungsteil 21 mit dem Fahrgestell 2 verbindet, bei dieser Variante einseitig ausgebildet ist. Außerdem ist hier ersichtlich, dass das Lager 20 mittels zweier Rahmenabzweigern 18, 19 in der Mitte des Fahrgestells 2 fixiert ist. Die Breite des Fahrgestells 2 ist dabei im Wesentlichen durch die Breite des Antriebsrads 3 vorgegeben, dessen Breite - wie weiter oben erläutert - aufgrund von Stabilitätskriterien bestimmt wird.

Zur Stromversorgung des Antriebsrades 3 können beispielsweise Nickel-Cadmium-, Nickel-Metallhydrid-, Lithium-Ionen- oder Lithium-Polymer-Akkus eingesetzt werden. Gegen die Verwendung von Nickel-Cadmium-Akkus spricht allerdings die Giftigkeit von Cadmium und gegen die Verwendung von Lithium-Polymer-Akkus spricht die hohe elektrische, thermische und mechanische Empfindlichkeit dieses Akku-Typs. Die Energiedichten der verwendbaren Akkus liegt zwischen 30 und 200 Wh/kg, bei einer Zellspannung im Bereich von 1,2 bis 3,7 Volt. Dementsprechend wird meist ein Batteriesystem von parallel und in Serie, beispielsweise drei in Serie und drei parallel, geschalteten Akkus verwendet. Derartige Batteriesysteme weisen gewöhnlich ein Plastikgehäuse und ein Zellhaltersystem auf und können über ein Kommunikationssystem zur Datenübermittlung zu einem Ladegerät verfügen.

Um die Betriebssicherheit in Hinblick auf den eingesetzten Akku zu gewährleisten, kann die Batterie 47 mit speziellen Sicherheitsmechanismen ausgestattet sein: bei zu hohem Stromfluss kann der Strom automatisch reduziert werden; bei hohem inneren Druck wird der Laststrom unterbrochen; Sicherheitsventile und eine Sollbruchstelle können bei einem gewissen inneren Druck, so dass eine Explosion der Zelle verhindert wird; beim Laden wird die obere und untere Spannungsgrenze überwacht; es wird ein maximaler Lade- und Entladestrom vorgesehen, sowie eine minimale und maximale Lade- und Entladetemperatur berücksichtigt. Die eingestzten Batteriesysteme sollen insgesamt kurzschlussfest, nicht brennbar, nicht durchbrennbar und nicht explosiv sein. Bei der Planung und Auswahl ist es zweckmäßig, die Packkonstruktion und die thermischen Verhältnisse im Pack zu beachten.

Zum Aufladen des Akkus ist ein geeignetes Ladegerät vorgesehen, wobei insbesondere auf das Zusammenspiel von Akku und Ladegerät zu achten ist. Der Ladevorgang wird durch einen Laderegler gesteuert, der sich in der Regel im (separaten) Ladegerät gefindet. Vor dem Laden wird mittels Ladeschaltung eine mögliche Tiefentladung festgestellt.

Bevorzugt wird bei dem hier gezeigten Golf-Trolley ein Lithium-Ionen Akku 47 eingesetzt, wobei die Kapazität des Akkus 47 auf den jeweiligen Einsatzzweck, d.h. beispielsweise auf die üblicherweise am Golfplatz zurückgelegte Distanz, abgestimmt wird. Es ist dementsprechend denkbar, verschiedene Akku-Varianten anzubieten, da dass die Transportvorrichtung 1 auf die Bedürfnisse des Benutzers abstimmbar ist. Typischerweise sollte der Golf-Trolley während eines gesamten Spieltages einsetzbar sein, so dass der Akku über Nacht geladen werden kann. Idealerweise wird ein Akku eingesetzt, dessen Kapazität beispielsweise für einen Golf-Urlaub, etwa eine Woche, ausreicht. Der Einsatz von Lithium-Ionen-Akkus hat sich bei Elektro-Fahrrädern bewährt und ermöglicht gegenüber anderen Akku-Arten eine wesentlich längere Nutzungsdauer.

Abgesehen von den in den Figuren dargestellten zweiachsigen Transportvorrichtungen ist es auch denkbar, zusätzliche Achsen mit frei drehbaren Rädern und/oder zusätzlichen angetriebenen Rädern vorzusehen. Dies ist insbesondere im Zusammenhang mit einer an der Führungsstange 21 angeordneten Sitzgelegenheit vorteilhaft, da somit die Belastung des Fahrgestells 2 besser verteilt werden kann. Wenn mit dem Fahrgestell 2 eine Sitz- oder Stehfläche für einen Benutzer vorgesehen ist, kann die Transportvorrichtung 1 auch zum Personentransport eingesetzt werden. In diesem Fall kann die Führungsstange 21 in eine im Wesentlichen aufrechte Stellung übergeführt werden, so dass eine Bedienung und Steuerung des Antriebs 7 und gegebenenfalls einer Servolenkung für den auf dem Fahrgestell 2 sitzenden oder stehenden Benutzer ermöglicht wird.

## Patentansprüche

1. Transportvorrichtung (1) mit einem Fahrgestell (2), das mindestens drei Räder (3, 4) an mindestens zwei Achsen lagert, von denen eine Achse eine Antriebsachse (3') ist, die nur ein einzelnes, mittiges, elektrisch angetriebenes Rad (3) trägt, welches einen Nabenmotor (7) aufweist, mit einer Stützeinheit (21'), die zur Aufnahme einer länglichen Last, vorzugsweise einer Golftasche, eingerichtet ist, und mit einem Führungsteil (21), welches auf einer Bedienungsseite einen Griffbereich aufweist, **dadurch gekennzeichnet, dass** die Antriebsachse (3') unverschwenkbar im Fahrgestell gelagert ist oder über eine mit einem Motor gegenüber dem Fahrgestell verdrehbare Gabel (51) mit dem Fahrgestell (2) verbunden ist, und dass das Verhältnis zwischen einem Durchmesser des angetriebenen Rads (3) und einer Breite der Lauffläche zwischen 0,6 und 3,25 liegt, wobei die Transportvorrichtung durch Abwärtsdrücken des Führungsteils (21) über die Antriebsachse (3') kippbar ist, wobei in der gekippten Betriebsstellung die Antriebsachse (3') am Fahrgestell (2) auf der Bedienungsseite vorliegt, die Stützeinheit (21') quer über die Antriebsachse (3') im Wesentlichen in Richtung der Bedienungsseite ragt und lediglich das einzelne angetriebene Rad (3) Bodenkontakt hat.

2. Vorrichtung nach Anspruch 1, **dadurch gekennzeichnet, dass** sich das Führungsteil (21) in der Betriebsstellung vom Fahrgestell (2) ausgehend über die Antriebsachse (3') hinweg erstreckt.

3. Vorrichtung nach Anspruch 1 oder 2, **dadurch gekennzeichnet, dass** das Führungsteil (21) der Stützeinheit (21') zugehörig ist, wobei an dem Führungsteil (21) zumindest ein Last-Aufnahmeelement (42) angeordnet sind.

4. Vorrichtung nach einem der Ansprüche 1 bis 3, **dadurch gekennzeichnet, dass** die frei drehbar gelagerten Räder (4) einen kleineren Durchmesser haben als das angetriebene Rad (3).

5. Vorrichtung nach einem der Ansprüche 1 bis 4, **dadurch gekennzeichnet, dass** das angetriebene Rad (3) eine im Wesentlichen ebene Lauffläche aufweist.

6. Vorrichtung nach einem der Ansprüche 1 bis 5, **dadurch gekennzeichnet, dass** das Fahrgestell (2) und das Führungsteil (21) in eine Transportstellung zusammenklappbar sind, wobei in der zusammengeklappten Transportstellung das Führungsteil (21) im Wesentlichen parallel zu einem die Achsen verbindenden Fahrgestell (2) angeordnet ist, und wobei das Führungsteil (21) bevorzugt selbst durch ein Klappgelenk (27, 28) geteilt und faltbar ist.

7. Vorrichtung nach Anspruch 6, **dadurch gekennzeichnet, dass** die nicht angetriebenen Räder (4) mit ihrer Achse (10) abnehmbar verbunden und am Fahrgestell (2) Hilfsachsen bzw. Achsenstummel (16, 17) zur platzsparenden Befestigung der nicht angetriebenen Räder (4) in der Transportstellung vorgesehen sind.

8. Vorrichtung nach einem der Ansprüche 1 bis 7, **dadurch gekennzeichnet, dass** am Fahrgestell (2) eine Batterie (47) im Wesentlichen in einer Ebene mit den Achsen (3', 10) angeordnet ist.

9. Vorrichtung nach einem der Ansprüche 1 bis 8, **dadurch gekennzeichnet, dass** im Griffbereich ein Steuergriff (37) zur Einstellung der Geschwindigkeit des angetriebenen Rads (3) angeordnet ist.

10. Vorrichtung nach einem der Ansprüche 1 bis 9, **dadurch gekennzeichnet, dass** im Griffbereich eine Anzeige (40) zur Visualisierung des Batterieladestands einer Antriebsbatterie (47) angeordnet ist.

11. Vorrichtung nach einem der Ansprüche 1 bis 10, **dadurch gekennzeichnet, dass** die verdrehbare Gabel (51) von einer Steuerungseinrichtung (48) mit einem Lenkantrieb (61) schwenkbar ist, wobei die Steuerungseinrichtung (48) auch zur Steuerung des Antriebsrades (3) eingerichtet ist.

12. Vorrichtung nach Anspruch 11, **dadurch gekennzeichnet, dass** die Steuerungseinrichtung (48) mit einem drahtlosen Empfänger zur Fernsteuerung verbunden ist.

13. Vorrichtung nach Anspruch 11 oder 12 **dadurch gekennzeichnet, dass** die Steuerungseinrichtung (48) mit einem GPS-System und bevorzugt mit am Fahrgestell (2) angeordneten Abstandssensoren (68) zur Erkennung von Hindernissen verbunden ist.

## Claims

1. Transport device (1) comprising a chassis (2) which supports at least three wheels (3, 4) on at least two axles, of which one axle is a drive axle (3') which bears only a single, central, electrically driven wheel (3) which has a hub motor (7), comprising a support unit (21') which is designed to receive a longitudinal load, preferably a golf bag, and comprising a guide part (21) which has a grip region on a service side, **characterised in that** the drive axle (3') is non-pivotally mounted in the chassis or is connected to the chassis (2) by means of a fork (51) that can be rotated relative to the chassis (2) by a motor, and **in that** the ratio between a diameter of the driven wheel (3) and a width of the tread is between 0.6 and 3.25, the transport device being tiltable about the drive axle (3') by downward pressure from the guide part (21), the drive axle (3') on the chassis (2), in the tilted operating position, being on the service side, the support unit (21') projecting transversely over the drive axle (3') substantially towards the service side, and only the single driven wheel (3) having contact with the ground.

2. Device according to claim 1, **characterised in that** the guide part (21), in the operating position, extends from the chassis (2) beyond the drive axle (3').

3. Device according to either claim 1 or claim 2, **characterised in that** the guide part (21) is associated with the support unit (21'), at least one load-receiving element (42) being arranged on the guide part (21).

4. Device according to any of claims 1 to 3, **characterised in that** the wheels (4) which are mounted in a freely rotatable manner have a smaller diameter than the driven wheel (3).

5. Device according to any of claims 1 to 4, **characterised in that** the driven wheel (3) has a substantially even tread.

6. Device according to any of claims 1 to 5, **characterised in that** the chassis (2) and the guide part (21) can be folded into a transport position, the guide part (21), in the folded transport position, being arranged substantially in parallel with a chassis (2) that connects the axles, and the guide part (21) itself preferably being split and foldable by a folding hinge (27, 28).

7. Device according to claim 6, **characterised in that** the non-driven wheels (4) are detachably connected to their axles (10), and auxiliary axles or axle stubs (16, 17) are provided on the chassis (2) in order to secure the non-driven wheels (4) in the transport position in a space-saving manner.

8. Device according to any of claims 1 to 7, **characterised in that** a battery (47) is arranged on the chassis (2) so as to be substantially coplanar to the axles (3', 10).

9. Device according to any of claims 1 to 8, **characterised in that** a control grip (37) is arranged in the grip region for adjusting the speed of the driven wheel (3).

10. Device according to any of claims 1 to 9, **characterised in that** a display (40) for visualising the battery charge status of a drive battery (47) is arranged in the grip region.

11. Device according to any of claims 1 to 10, **characterised in that** the rotatable fork (51) can be pivoted by a control device (48) comprising a steering drive (61), the control device (48) also being designed to control the drive wheel (3).

12. Device according to claim 11, **characterised in that** the control device (48) is connected to a wireless receiver for remote control.

13. Device according to either claim 11 or claim 12, **characterised in that** the control device (48) is connected to a GPS system and preferably to distance sensors (68) arranged on the chassis (2) for identifying obstacles.

## Revendications

1. Dispositif de transport (1) avec un châssis (2), qui loge au moins trois roues (3, 4) au niveau d'au moins deux essieux, dont un essieu est un essieu d'entraînement (3') qui ne supporte qu'une seule roue (3) centrale entraînée électriquement, qui comprend un moteur à moyeu (7), avec une unité d'appui (21') qui est conçue pour le logement d'une charge allongée, de préférence un sac de golf, et avec une partie de guidage (21) qui comprend, sur un côté de commande, une zone de préhension, **caractérisé en ce que** l'essieu d'entraînement (3') est logé de manière non pivotante dans le châssis ou est relié, par l'intermédiaire d'une fourche (51) rotative, avec un moteur, par rapport au châssis, avec le châssis (2) et **en ce que** le rapport entre un diamètre de la roue entraînée (3) et une largeur de la surface de roulement est entre 0,6 et 3,25, le dispositif de transport pouvant être basculé par une pression vers le bas de la partie de guidage (21) par l'intermédiaire de l'essieu d'entraînement (3'), moyennant quoi, dans la position de commande l'essieu d'entraînement (3') se trouvant sur le châssis (2) du côté de commande, l'unité d'appui (21') dépassant transversalement de l'essieu d'entraînement et seule la roue entraînée (3) étant en contact avec le sol.

2. Dispositif selon la revendication 1, **caractérisé en ce que** la partie de guidage (21) s'étend, dans la position de fonctionnement, à partir du châssis (2) au-delà de l'essieu d'entraînement (3').

3. Dispositif selon la revendication 1 ou 2, **caractérisé en ce que** la partie de guidage (21) appartient à l'unité d'appui (21'), au moins un élément de logement de charge (42) étant disposé sur la partie de guidage (21).

4. Dispositif selon l'une des revendications 1 à 3, **caractérisé en ce que** les roues (4) logées de manière librement rotative présentent un diamètre inférieur à celui de la roue entraînée (3).

5. Dispositif selon l'une des revendications 1 à 4, **caractérisé en ce que** la roue entraînée (3) présente une surface de roulement globalement plane.

6. Dispositif selon l'une des revendications 1 à 5, **caractérisé en ce que** le châssis (2) et la partie de guidage (21) peuvent être repliés dans une position de transport, moyennant quoi, dans la position de transport repliée, la partie de guidage (21) est disposée de manière globalement parallèle à un châssis (2) reliant les essieux, et la partie de guidage (21) est de préférence elle-même divisée par une articulation de pliage (27, 28) et pliable.

7. Dispositif selon la revendication 6, **caractérisé en ce que** les roues non entraînées (4) sont reliées avec leur essieu (10) de manière amovible et, sur le châssis (2) sont prévus des essieux auxiliaires ou des embouts d'essieux (16, 17) pour une fixation à faible encombrement des roues non entraînées (4) dans la position de transport.

8. Dispositif selon l'une des revendications 1 à 7, **caractérisé en ce que**, sur le châssis (2) est disposée une batterie (47) globalement dans le même plan que les essieux (3', 10).

9. Dispositif selon l'une des revendications 1 à 8, **caractérisé en ce que**, dans la zone de préhension, est disposée une poignée de commande (37) pour le réglage de la vitesse de la roue entraînée (3).

10. Dispositif selon l'une des revendications 1 à 9, **caractérisé en ce que**, dans la zone de préhension, est disposé un affichage (40) pour la visualisation de l'état de charge de la batterie (47).

11. Dispositif selon l'une des revendications 1 à 10, **caractérisé en ce que** la fourche rotative (51) peut être pivotée par un dispositif de commande (48) avec un mécanisme de direction (61), le dispositif de commande (48) étant également conçu pour contrôler la roue d'entraînement (3).

12. Dispositif selon la revendication 11, **caractérisé en ce que** le dispositif de commande (48) est relié à un récepteur sans fil pour une commande à distance.

13. Dispositif selon la revendication 11 ou 12, **caractérisé en ce que** le dispositif de commande (48) est relié à un système GPS et de préférence à des capteurs de distance (68) disposés sur le châssis (2) pour la détection d'obstacles.
